(19) Europäisches Patentamt / European Patent Office / Office européen des brevets

(11) **EP 1 797 457 B1**

(12) **EUROPÄISCHE PATENTSCHRIFT**

(45) Veröffentlichungstag und Bekanntmachung des Hinweises auf die Patenterteilung:
**24.08.2016 Patentblatt 2016/34**

(51) Int Cl.:
**G01S 17/32** *(2006.01)* **G01S 7/497** *(2006.01)*
**G01S 7/491** *(2006.01)* **G01S 7/40** *(2006.01)*

(21) Anmeldenummer: **05794659.2**

(22) Anmeldetag: **29.09.2005**

(86) Internationale Anmeldenummer:
**PCT/EP2005/054900**

(87) Internationale Veröffentlichungsnummer:
**WO 2006/040263 (20.04.2006 Gazette 2006/16)**

(54) **ELEKTROOPTISCHES DISTANZMESSVERFAHREN MIT BESTIMMUNG EINES NICHTIDEALEN CHIRPVERLAUFS**

ELECTRO-OPTICAL METHOD FOR MEASURING DISTANCE AND DETECTING A NON-IDEAL CHIRP PROFILE

PROCEDE DE MESURE DE DISTANCE ELECTRO-OPTIQUE FAISANT INTERVENIR LA DETERMINATION D'UNE ALLURE DE FLUCTUATION NON-IDEALE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **09.10.2004 EP 04024127**

(43) Veröffentlichungstag der Anmeldung:
**20.06.2007 Patentblatt 2007/25**

(73) Patentinhaber: **Leica Geosystems AG**
**9435 Heerbrugg (CH)**

(72) Erfinder:
• **AEBISCHER, Beat**
**CH-9435 Heerbrugg (CH)**
• **ROHNER, Marcel**
**CH-9410 Heiden (CH)**

(74) Vertreter: **Kaminski Harmann**
**Patentanwälte AG**
**Landstrasse 124**
**9490 Vaduz (LI)**

(56) Entgegenhaltungen:
EP-A- 0 501 566 EP-A- 1 316 815
EP-A- 1 464 982

• KULPA K S ET AL: "The simple method for analysis of nonlinear frequency distortions in FMCW radar" MICROWAVES, RADAR AND WIRELESS COMMUNICATIONS. 2000. MIKON-2000. 13TH INTERNATIONAL CONFERENCE ON MAY 22-24, 2000, PISCATAWAY, NJ, USA,IEEE, Bd. 1, 22. Mai 2000 (2000-05-22), Seiten 235-238, XP010537348 ISBN: 83-906662-3-5
• KARLSSON C J ET AL: "Linearization of the frequency sweep of a frequency-modulated continuous-wave semiconductor laser radar and the resulting ranging performance" APPLIED OPTICS OPT. SOC. AMERICA USA, Bd. 38, Nr. 15, 20. Mai 1999 (1999-05-20), Seiten 3376-3386, XP002319569 ISSN: 0003-6935
• PELEG S ET AL: "Signal estimation using the discrete polynominal transform" STATISTICAL SIGNAL AND ARRAY PROCESSING. MINNEAPOLIS, APR. 27 - 30, 1993, PROCEEDINGS OF THE INTERNATIONAL CONFERENCE ON ACOUSTICS, SPEECH, AND SIGNAL PROCESSING (ICASSP), NEW YORK, IEEE, US, Bd. VOL. 4, 27. April 1993 (1993-04-27), Seiten 424-427, XP010110820 ISBN: 0-7803-0946-4
• PELEG S ET AL: "Linear FM signal parameter estimation from discrete-time observations" IEEE TRANSACTIONS ON AEROSPACE AND ELECTRONIC SYSTEMS USA, Bd. 27, Nr. 4, 4. Juli 1991 (1991-07-04), Seiten 607-616, XP002319570 ISSN: 0018-9251

EP 1 797 457 B1

- **DJURIC P M ET AL: "Parameter estimation of chirp signals" IEEE TRANSACTIONS ON ACOUSTICS, SPEECH AND SIGNAL PROCESSING USA, Bd. 38, Nr. 12, 12. Dezember 1990 (1990-12-12), Seiten 2118-2126, XP002319571 ISSN: 0096-3518**

EP 1 797 457 B1

**Beschreibung**

Die Erfindung betrifft ein elektrooptisches Distanzmessverfahren nach dem Oberbegriff des Anspruchs 1, eine elektrooptische Distanzmessvorrichtung nach dem Oberbegriff des Anspruchs 9 und ein Computerprogrammprodukt.

Im Bereich der elektronischen bzw. elektrooptischen Distanzmessung sind verschiedene Prinzipien und Verfahren bekannt. Der Ansatz besteht darin, frequenzmodulierte elektromagnetische Strahlung, wie z.B. sichtbares oder nicht-sichtbares Laserlicht, auf das zu vermessende Ziel auszusenden und nachfolgend ein oder mehrere Echos von rückstreuenden Objekten, idealerweise ausschliesslich vom zu vermessenden Ziel, zu empfangen. Nach dem Empfang wird das ggf. überlagerte Echosignal mit einem Mischsignal überlagert und dadurch die zu analysierende Frequenz des Signals vermindert, so dass vorrichtungsseitig nur ein geringerer Aufwand notwendig ist. Das Mischen kann dabei entweder als homodynes Verfahren mit dem gesendeten Signal oder als heterodynes Verfahren mit einem periodischen, insbesondere harmonischen, Signal bekannter Periode erfolgen. Somit unterscheiden sich die Verfahren darin, dass mit dem Sendesignal selbst oder mit einem harmonischen Signal mit einer eigenen Frequenz gemischt wird. Die Mischung dient dazu, das empfangene Signal zu tieferen Frequenzen zu transformieren. Nachfolgend werden aus dem resultierenden Signal die Laufzeiten und damit - bei bekannter Ausbreitungsgeschwindigkeit der verwendeten Strahlung - die Distanzen zu den zu vermessenden Zielen bestimmt.

Die zur Umsetzung dieser Verfahren verwendeten Vorrichtungen nutzen üblicherweise einen Signalgenerator als Chirp-Generator, der einer modulierbaren Strahlungsquelle ein Signal aufprägt. Im optischen Bereich werden als Strahlungsquellen zumeist Laser eingesetzt. Zur Emission und zum Empfang kommen im optischen Bereich Sende- und Empfangsoptiken zum Einsatz, denen ein Detektor bzw. Empfänger mit nachfolgendem Mischer, A/D-Wandler und digitalem Signal-Prozessor nachgeschaltet ist.

Üblicherweise wird vom Signalgenerator als Signal $s(t)$ ein linear frequenzmodulierter Chirp erzeugt:

$$s(t) = a + b \cdot \cos(2\pi \cdot \Phi(t)), \quad \Phi(t) = c + d \cdot t + e \cdot t^2 \qquad (1)$$

wobei die momentane Frequenz $f(t) = \dfrac{d\Phi(t)}{dt}$ dann eine lineare Funktion der Zeit ist:

$$f(t) = d + 2e \cdot t \qquad (2)$$

was die Bestimmung der Laufzeiten vereinfacht.

Im Fall von $n$ Zielen mit relativen Amplituden $A_k$ und Laufzeiten $t_k$ ($k = 1, ..., n$) kann das rauschfreie Echosignal e(t) wie folgt geschrieben werden:

$$e(t) = \sum_{k=1}^{n} A_k s(t - t_k) \qquad (3)$$

Dieses Echosignal e(t) wird detektiert und mit dem Signal $m(t)$ gemischt:

$$m(t) = \begin{cases} s(t - t_0), & \text{homodyn} \\ \cos(2\pi(f_0 t + \varphi)), & \text{heterodyn} \end{cases} \qquad (4)$$

Durch das Mischen mit $m(t)$ entsteht das Signal

$$d(t) = \int_{0}^{\infty} h(t - t') \cdot e(t') \cdot m(t') dt' \qquad (5)$$

wobei h die Impulsantwort eines geeigneten Tiefpassfilters bezeichnet.

Für einen idealen Tiefpass lässt sich die Tiefpassfilterung in (5) gemäss dem Stand der Technik in sehr guter Approximation explizit ausführen, im homodynen Fall zum Beispiel folgt aus der ersten Gleichung in (1) und den Gleichungen (3) bis (5) nach Weglassen der hochfrequenten Terme

$$d(t) = d_0 + \frac{b^2}{2} \sum_{k=1}^{n} A_k \cos\left(2\pi\left[\Phi(t-t_k) - \Phi(t-t_0)\right]\right) \qquad (5')$$

$n$ mit dem Signaloffset $d_0 = a^2 \sum_{k=1}^{n} A_k$ .

Das gemischte Signal d(t) wird auf dem endlichen Messintervall $-T/2 \leq t \leq T/2$ digitalisiert und abgespeichert. Aus der Frequenz- und ggf. der Phaseninformation dieses Signals werden die Laufzeiten $t_k$ bestimmt, wobei normalerweise $n$ als klein und eventuell auch als bekannt vorausgesetzt werden kann. Eines der Echos, z.B. das $n$-te, kann auch von einem fixen und bekannten Referenzziel stammen und die Zieldistanzen der restlichen Ziele werden aus den Laufzeit-differenzen $t_k - t_n$ und der bekannten Distanz des Referenzziels berechnet. Im homodynen Fall kann das Mischsignal $m(t) \cdot s(t - t_0)$ selber als Referenz dienen, $t_0$ entspricht dann der Referenzdistanz.

Im Fall eines linearen Chirps gemäss Gleichung (1) trägt das $k$-te Echo die momentane Frequenz

$$f_k(t) = \begin{cases} 2e(t_0 - t_k), & \text{homodyn} \\ d + 2e(t - t_k) - f_0, & \text{heterodyn} \end{cases} \qquad (6)$$

zum Signal d(t) bei. Somit können in diesem Fall aus einer - im heterodynen Fall zeitaufgelösten - Frequenzanalyse des Signals d(t) grundsätzlich die Laufzeiten $t_k$ direkt bestimmt werden, wobei die Auflösung allerdings noch grob ist. Genauere Resultate können durch die Berücksichtigung der Phaseninformation erhalten werden.

Im Stand der Technik werden solche oder ähnliche Verfahren beispielsweise in den folgenden Druckschriften beschrieben.

EP 0 834 086 B1 beschreibt ein optisches FMCW-Abstandsmessverfahren, das bei kurzer Messzeit eine Genauigkeit im Bereich von Phasenmessverfahren aufweist. Dabei erzeugt ein Chirpgenerator beispielsweise ein linear frequenzmoduliertes Signal, das in ein Sende- und Referenzsignal aufgeteilt wird, wobei beide Signale in einem Quadraturempfänger komplex miteinander multipliziert werden.

Aus der DE 196 10 970 A1 ist ein frequenzmoduliertes Verfahren mit kontinuierlicher Emission (FMCW-Verfahren) zur Abstandsmessung mit elektromagnetischer Strahlung im Radarbereich bekannt. Dabei wird ein zeitlinear frequenzmoduliertes (gewobbeltes) Signal ausgesandt und nach Reflexion an einem Ziel und nachfolgendem Empfang analysiert. Aus Sende- und Empfangssignal wird hierbei in einem Mischer ein Zwischenfrequenzsignal erzeugt, welches einer schnellen Fouriertransformation unterworfen wird.

In beiden Druckschriften - wie auch in anderen Lösungen des Stands der Technik - wird für die Auswertung ein bekannter, von der Gerätealterung unabhängiger und zeitlich linearer Verlauf der Modulationsfrequenz $f(t)$ vorausgesetzt. Sowohl die Bedingung der Bekanntheit als auch der Alterungsunabhängigkeit und der Linearität sind vorrichtungsseitig nicht oder nur unter grossem Aufwand in der erforderlichen Genauigkeit zu realisieren.

So beschreibt beispielsweise die Offenlegungsschrift DE 100 65 657 A1 kaskadierte Phasenregelkreise zur Linearisierung von Oszillatoren mit starkem Phasenrauschen. Ziel ist dabei die Erzeugung von linearen analogen Frequenzrampen. Dennoch bleiben erzielbare Linearität und Kenntnis des Frequenzverlaufs Beschränkungen unterworfen, die auch mit grossem vorrichtungsseitigen Aufwand nicht ganz zu vermeiden sind.

Einen Chirp mit vorgegebenem Frequenzverlauf (z.B. linear) zu erzeugen, ist somit technisch aufwendig und grundsätzlich auch nicht beliebig exakt und stabil möglich. Die auftretenden Abweichungen des Sendesignals vom idealen Verhalten verursachen systematische Messfehler.

Die EP 1 464 982 beschreibt ein Verfahren für FMCW-Radargeräte mit einem nichtlinearen rampenförmig modulierten Sendefrequenzverlauf. Dabei erfolgt eine Linearisierung der - im idealen Fall des linearen Chirp quadratischen - Phasenfunktion. Für die in diesem Dokument angegebenen Parameter beträgt diese Approximation bei einer Zieldistanz von 1100 m etwa 10 ppm, so dass dieser Ansatz aus dem Radarbereich für die hochpräzisen Messungen der elektrooptischen Verfahren nicht geeignet ist. Zudem verwendet das Verfahren einen Polynom-Ansatz, bei dem der lineare Anteil bei der Modellierung der Senderampe als bekannt vorausgesetzt wird. Auch werden für die Auswertung die Phasenwerte benötigt, so dass ein Phase-Unwrapping erforderlich ist. Dieser Ansatz basiert somit auf einer fehlerverursachenden vereinfachten Modellierung und der a-priori-Kenntnis von Parametern bzw. der notwendigen Auflösung der Phasenwerte zur Ableitung der Mopdellparameter.

Eine Aufgabe der Erfindung besteht darin, eine Lösung bereitzustellen, die eine verbesserte Identifizierung und Kenntnis des Frequenzverlaufs und/oder eine Verringerung bzw. Vermeidung der Fehler oder deren Auswirkungen erlaubt, wobei das (reelle) Empfangssignal direkt zur Auswertung genutzt werden soll.

Eine weitere Aufgabe der vorliegenden Erfindung ist es, bei gleichbleibender Leistung die Anforderungen an die verwendeten Komponenten zu verringern bzw. bei gleichbleibenden Komponenten die Leistung zu erhöhen.

Diese Aufgaben werden durch die Gegenstände des Anspruchs 1 bzw. 9 oder der abhängigen Ansprüche gelöst bzw. die Lösungen weitergebildet.

Die Erfindung beruht darauf, die Phasenfunktion $\Phi(t)$ durch endlich viele, auch nichtlineare, Parameter zu modellieren. Dies kann durch eine allgemeine Darstellung mit beliebigen Parametern $c_1,...,c_m$ gemäss

$$\Phi(t) = \Phi(t; c_1,...,c_m) \qquad (7)$$

erfolgen oder zum Beispiel durch Linearkombination geeigneter Basisfunktionen $\Phi_j(t)$, insbesondere Potenzen oder orthogonale Polynome, Wavelets, diskrete Deltafunktionen an den Abtastzeitpunkten, mit den Koeffizienten $c_1,...,c_m$ als lineare Parameter:

$$\Phi(t) = \sum_{j=1}^{m} c_j \Phi_j(t) \qquad (7')$$

Die zusätzlichen Parameter $c_j$ oder zumindest ein Teil der Parameter $c_j$ werden durch Messungen bestimmt, z.B. bei jeder Messung mitbestimmt, wobei diese Bestimmung auch zusammen mit allen anderen relevanten System-parametern sowie den Laufzeiten $t_k$ erfolgen kann. Die Bestimmung aller unbekannten Parameter wird damit zu einem (statistischen) Parameterschätzproblem. Ein Beispiel für ein konkretes Bestimmungsverfahren ist das bekannte Maximum-Likelihood-Verfahren, siehe zum Beispiel §35 in B. L. van der Waerden: Mathematische Statistik, Springer-Verlag, Berlin, Göttingen, Heidelberg, 1957. Dabei werden die unbekannten Parameter im Modellsignal d(t) gemäss Gleichung (5') (oder allgemeiner gemäss den Gleichungen (1), (7), (3), (4) und (5)) - also $A_1, ..., An, t_1, ... , t_n, c_1, ... , c_m$ und $t_0$ bzw. $f_0$ und $\varphi$, sowie der Signaloffset $d_0$ - so bestimmt, dass die Abweichung zum tatsächlich gemessenen Signal, interpretiert als Rauschvektor, maximale Wahrscheinlichkeitsdichte hat.

Im Fall von unkorreliertem normalverteiltem Rauschen, zum Beispiel, entspricht das einer (nichtlinearen) Ausgleichung nach der Methode der kleinsten Quadrate. Damit ist die Bestimmung der Parameter und der Laufzeiten $t_k$ - und damit der gesuchten Zieldistanzen - auch im allgemeinen Fall von korreliertem Rauschen auf ein nichtlineares Optimierungsproblem zurückgeführt, für dessen Lösung im Stand der Technik viele, meist iterative, Methoden bekannt sind - zum Beispiel D. W. Marquardt: An Algorithm for Least-Squares Estimation of Nonlinear Parameters, SIAM Journal on Applied Mathematics 11 (1963), 431-441 oder K. Levenberg: A. Method for the Solution of Certain Non-Linear Problems in Least Squares, Quarterly of Applied Mathematics 2 (1944), 164-168 oder auch das klassische BFGS-Verfahren und Weiterentwicklungen davon oder modernere Verfahren wie sie z.B. im Übersichtsartikel A. Forsgren, P. E. Gill, M. H. Wright: Interior Methods for Nonlinear Optimization, SIAM Review 44 (2002), 525-597 beschrieben sind.

Die Gewinnung von approximativen Startwerten für die iterative Optimierung kann auch basierend auf Gleichung (6) mit bekannten Methoden erfolgen, wenn die Abweichung des Chirpsignals vom linearen Fall relativ klein ist, was als häufiger Fall anzusehen ist.

Zur Verbesserung der Konditionierung des Schätzproblems, d.h. zur Erhöhung der numerischen Stabilität, wird auch die totale Phasenänderung im Sendesignal während eines bekannten Zeitintervalls $t_a \leq t \leq t_b$ - z.B. während des Messintervalls, $t_a = -T/2, t_b = T/2$ - gemäss $\Phi_{tot} = \Phi(t_b) - \Phi(t_a)$ gemessen. Im Fall von Gleichung (7') führt dies auf eine lineare Nebenbedingung

$$\sum_{j=1}^{m} \left[\Phi_j(t_b) - \Phi_j(t_a)\right] \cdot c_j = \Phi_{tot} \qquad (8')$$

für die Koeffizienten $c_1, ... c_m$, die bei der Optimierung berücksichtigt werden kann. Im allgemeinen Fall (7) ist die nichtlineare Nebenbedingung

$$\Phi(t_b; c_1,...,c_m) - \Phi(t_a; c_1,...,c_m) = \Phi_{tot} \qquad (8)$$

bei der Optimierung zu berücksichtigen.

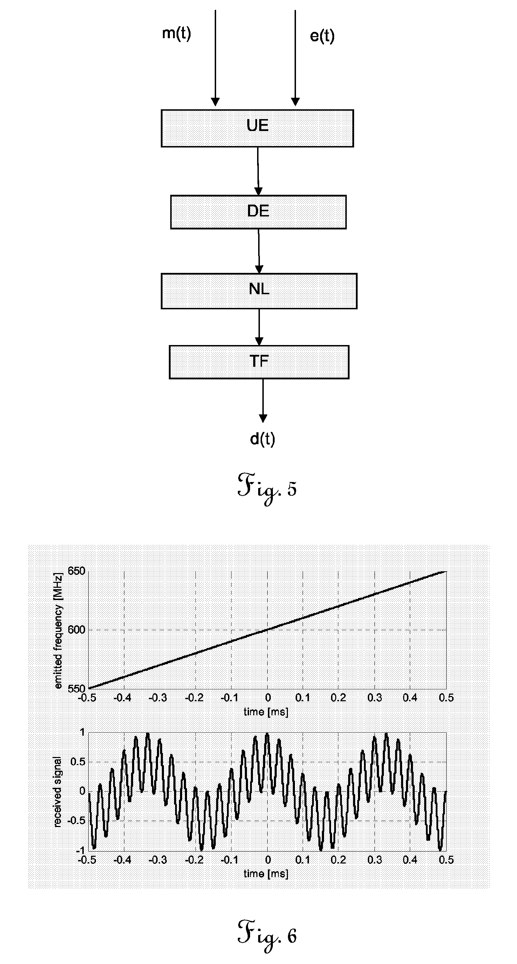

Die Messung von $\Phi_{tot}$ kann zum Beispiel einfach durch Zählen der Nulldurchgänge des Sendesignals realisiert werden; der Messfehler beträgt dann höchstens ½, was für die meisten Zwecke gegenüber der grossen Phasendifferenz $\Phi_{tot}$ vernachlässigbar ist. Zum Beispiel ist im Fall der Figuren 6 bis 11 mit $t_a = -T/2, t_b = T/2 : \Phi_{tot} \approx 10^5$. Mit zusätzlichem

vorrichtungsseitigem Aufwand kann der Fehler bei Bedarf auch noch weiter reduziert werden, beispielsweise durch Bestimmung der Restphase mittels Rampenintegration ("single-slope integration").

Ein weiterer Vorteil dieses Ansatzes ist auch, dass kein Quadraturempfänger benötigt wird, wie er beispielsweise in EP 0 834 086 B1 als notwendige Komponente beschrieben wird.

Die Kenntnis des tatsächlichen Verlaufs des vom Signalgenerator erzeugten Signals bzw. der von der Strahlungsquelle emittierten frequenzmodulierten Strahlung erlaubt grundsätzlich zwei Ansätze. Zum einen kann der nichtlineare Anteil im Signal bereits bei der Signalerzeugung antizipiert werden, indem der Signalgenerator entsprechend angesteuert wird. Die Signalerzeugung wird somit - beispielsweise in Echtzeit - an den tatsächlich erfolgenden Signalverlauf angepasst. Zum anderen erlaubt die Kenntnis des aktuellen Fehlers auch dessen Kompensation bei der Signalverarbeitung und Distanzberechnung. Beide Ansätze können auch miteinander kombiniert werden, z.B. indem der Signalgenerator bis zu einer gewissen Schwelle an Nichtlinearität nachgeregelt wird, während die verbleibende Abweichung in Kauf genommen und rechnerseitig berücksichtigt wird.

Die erfindungsgemässe Distanzmessvorrichtung bzw. das Distanzmessverfahren wird nachfolgend anhand von in der Zeichnung schematisch dargestellten Ausführungsbeispielen rein beispielhaft näher beschrieben oder erläutert. Im einzelnen zeigen

Fig.1 die schematische Darstellung eines ersten erfindungsgemässen Ausführungsbeispiels mit elektrischem Signal als Mischsignal und einem Zähler für die totale Phase;

Fig.2 die schematische Darstellung eines zweiten erfindungsgemässen Ausführungsbeispiels mit optisch detektiertem Signal als Mischsignal und einem Zähler für die totale Phase;

Fig.3 die schematische Darstellung eines dritten erfindungsgemässen Ausführungsbeispiels mit elektrischem Signal als Mischsignal und einem Quadraturempfänger;

Fig.4 die schematische Darstellung eines vierten erfindungsgemässen Ausführungsbeispiels mit optisch detektiertem Signal als Mischsignal und einem Quadraturempfänger;

Fig.5 die schematische Darstellung der Erzeugung eines Mischterms durch die Abfolge von Überlagerung und Nichtlinearität;

Fig.6 die Darstellung des Frequenzverlaufs und des Empfangssignals für einen perfekten linearen Chirp im homodynen Fall;

Fig.7 die Darstellung einer Störung des idealen Chirps mit einem zusätzlichen Term vierter Ordnung im homodynen Fall;

Fig.8 die Darstellung von Differenzen von emittierter Frequenz und empfangenem Signal zwischen gestörtem und idealem Chirp im homodynen Fall;

Fig.9 die Darstellung des Frequenzverlaufs und des Empfangssignals für den linearen Chirp im heterodynen Fall;

Fig.10 die Darstellung einer Störung des idealen Chirps mit einem zusätzlichen Term vierter Ordnung im heterodynen Fall und

Fig.11 die Darstellung von Differenzen von emittierter Frequenz und empfangenem Signal zwischen gestörtem und idealem Chirp im heterodynen Fall.

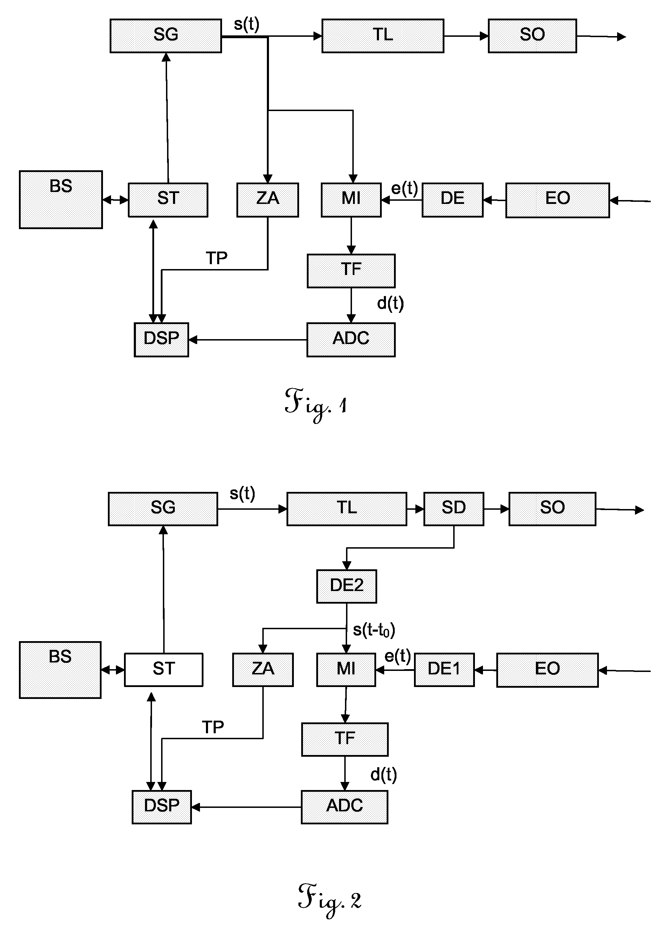

In den Fig.1 bis Fig.5 werden rein optische Ausführungsbeispiele dargestellt, bei denen die folgenden Bezugszeichen zur Kennzeichnung von Elementen der rein schematischen Darstellungen der Vorrichtungs-Komponenten verwendet werden. Dabei wird nur die homodyne Variante dargestellt. Es sind aber auch heterodyne Varianten und Vorrichtungen im nicht-optischen Spektralbereich, wie z.B. im Radar- oder Mikrowellenbereich, erfindungsgemäss realisierbar. Für die heterodyne Variante ist ein weiterer Signalgenerator bzw. ein weiterer Signalausgang erforderlich, der das zweite zum Mischen benötigte Signal generiert.

**Bezugszeichenliste**

| ADC | Analog-Digital-Wandler |
| --- | --- |
| BS | Benutzerschnittstelle |
| DE | Detektor |
| DE1 | Erster Detektor |
| DE2 | Zweiter Detektor |
| DSP | digitaler Signal-Prozessor |
| EO | Empfangsoptik |
| MI | Mischer |
| MI1 | Erster Mischer |
| MI2 | Zweiter Mischer |
| MS | Mischsignal |
| NL | Nichtlinearität |
| SD | Strahlteiler |
| SG | Signalgenerator |
| SO | Sendeoptik |
| ST | Steuerung |
| TF | Tiefpaßfilter |
| TL | Treiber und Laser |
| UE | Überlagerung |
| ZA | Zähler |
| 90° | 90°-Phasenschieber |

Fig. 1 zeigt die schematische Darstellung eines ersten erfindungsgemässen Ausführungsbeispiels mit einem Mischer MI, in den das elektrische Signal s(t) des Signalgenerators SG und das Echosignal e(t) des Detektors DE eingekoppelt werden. Das Signal s(t) des Signalgenerators SG wird ebenfalls verwendet, um der von Treiber und Laser TL generierten Strahlung eine Frequenzmodulation aufzuprägen. Diese optische Strahlung im sichtbaren oder nichtsichtbaren Spektralbereich wird über eine Sendeoptik SO emittiert und nach der Reflektion an einem oder mehreren Zielen bzw. Objekten wieder über eine Empfangsoptik EO und einen Detektor DE empfangen. Damit wird im homodynen Verfahren vom Mischer MI sowohl das Signal s(t) des Signalgenerators SG als auch das in der empfangenen Strahlung beinhaltete Signal der Strahlerzeugung von Treiber und Laser TL verwendet. Das Ergebnis des Mischers MI wird über einen Tiefpaßfilter TF und einen Analog-Digital-Wandler ADC digitalisiert und dem digitalen Signal-Prozessor DSP zur Signalverarbeitung zugeführt. Parallel zum Mischer MI wird durch einen Zähler ZA die totale Phase TP bestimmt und ebenfalls zum digitalen Signal-Prozessor DSP geführt. Eine Steuerung ST kontrolliert den Signalgenerator SG, so dass eine Abweichung der Signalerzeugung vom idealen Verlauf kompensiert werden kann. Durch die Steuerung ST kann somit das vom Signalgenerator SG erzeugte Signal s(t) entweder so variiert werden, dass die tatsächliche Emission einen linearen Frequenzverlauf aufweist oder aber der Fehler wird rein algorithmisch bei der Auswertung berücksichtigt. Darüber hinaus können Korrekturen der Abweichung vom idealen Verhalten und deren rechnerische Berücksichtigung auch kombiniert werden. Über eine Benutzerschnittstelle BS kann die Distanzmessvorrichtung gesteuert werden.

In Fig.2 erfolgt die schematische Darstellung eines zweiten erfindungsgemässen Ausführungsbeispiels mit einem Mischer MI mit optisch detektiertem Signal und einem Zähler ZA für die totale Phase TP. Im Unterschied zur Fig.1 wird das Signal s(t) des Signalgenerators SG nicht direkt dem Mischer MI zugeführt, sondern es wird die von Treiber und Laser TL emittierte Strahlung über einen Strahlteiler SD auf einen zweiten Detektor DE2 geleitet, dessen Ausgang ist wiederum sowohl mit dem Mischer MI als auch einem Zähler ZA zur Bestimmung der totalen Phase TP verbunden. Diese Anordnung nutzt somit neben dem Echosignal e(t) ein zweites optisch detektiertes Signal s(t-t₀), das über eine interne Strecke geführt wird, so dass sich Einflüsse der Treiber/Laser-Kombination TL gleichermassen auf beide Signale des Mischers MI auswirken.

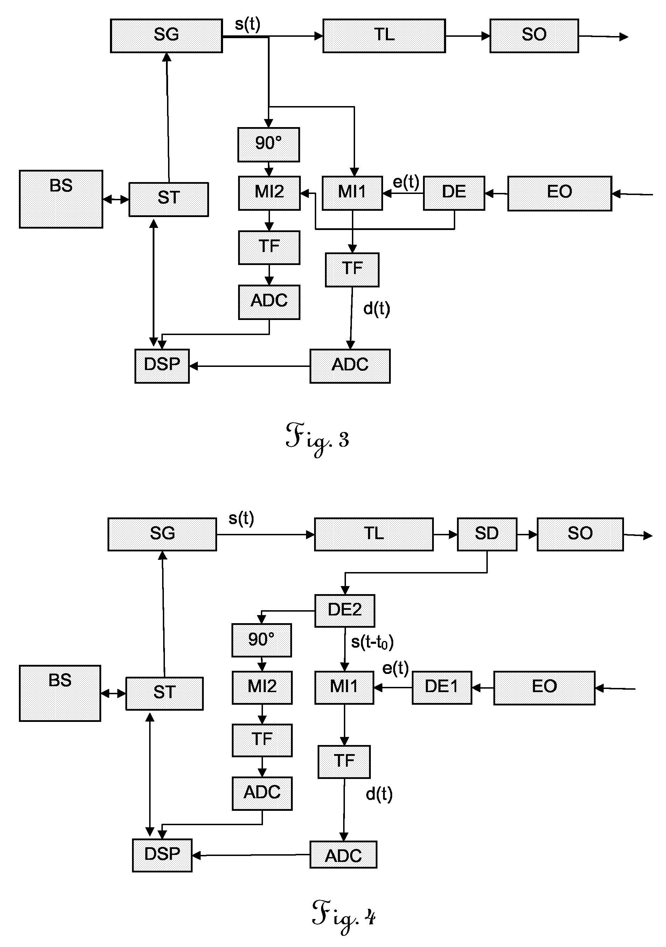

Ein zu Fig.1 ähnliches Ausführungsbeispiel wird in Fig.3 als schematische Darstellung eines dritten erfindungsgemässen Ausführungsbeispiels mit zwei Mischern, direkter elektrischer Signaleinkopplung und einem Quadraturempfänger gezeigt. Das Signal s(t) des Signalgenerators SG wird einem ersten Mischer MI1 und einem zweiten Mischer MI2 mit nachgeschalteten Tiefpaßfiltern TF und Analog-Digital-Wandlern ADC zugeführt, wobei das Signal des zweiten Mischers MI2 in einem 90°-Phasenschieber verschoben wird. Das Echosignal e(t) der vom Detektor DE registrierten Strahlung wird sowohl in den ersten Mischer MI1 als auch in den zweiten Mischer MI2 eingekoppelt, so dass insgesamt ein Quadraturempfänger resultiert.

Fig.4 zeigt die schematische Darstellung eines zum zweiten Ausführungsbeispiel von Fig.2 ähnlichen vierten erfindungsgemässen Ausführungsbeispiels mit zwei Mischern, optisch detektiertem Signal s(t-t₀) und einem Quadraturempfänger. Dieses vierte Ausführungsbeispiel kombiniert den Quadraturempfänger des dritten Ausführungsbeispiels der Fig.3 mit der optischen Detektion des Signals s(t-t₀) des zweiten Ausführungsbeispiels der Fig.2. Im Unterschied zur Fig.1 wird das Signal s(t) des Signalgenerators SG nicht direkt dem Quadraturempfänger zugeführt, sondern es wird die von Treiber und Laser TL emittierte Strahlung über einen Strahlteiler SD auf einen zweiten Detektor DE2 geleitet, der wiederum mit dem Quadraturempfänger verbunden ist.

In Fig.5 erfolgt die schematische Darstellung der Erzeugung eines Mischterms durch die Abfolge von Überlagerung UE und Nichtlinearität NL. Diese Erzeugung eines Mischterms stellt eine weitere grundsätzliche Möglichkeit dar, die mit jeder der obigen Ausführungsbeispiele kombiniert werden kann. Insbesondere in Zusammenhang mit dem zweiten Ausführungsbeispiel bieten sich Vorteile, da hiermit ein Detektor eingespart werden kann. Der Ersatz eines Mischers erfolgt durch die Überlagerung UE von Mischsignal $m(t)$ und Echosignal $e(t)$ vor oder auf dem Detektor DE mit nachfolgender Nichtlinearität NL und einem Tiefpassfilter TF. Eine quadratische Nichtlinearität NL erzeugt als Mischterm gerade das gewünschte Produkt und die Tiefpassfilterung TF unterdrückt die unerwünschten Terme. Dieses Prinzip wird zum Beispiel in Dioden- oder FET-Mischern verwendet.

In den folgenden Fig.6-11 werden die Auswirkungen einer Abweichung vom streng linearen Verlauf des Chirps für ein homodynes und ein heterodynes Beispiel gezeigt, aus denen Fehler in der Distanzmessung resultieren können. Ohne Modellierung des Chirpverlaufs muss entweder ein hoher vorrichtungsseitiger Aufwand erfolgen, um die Linearitätsanforderungen einzuhalten, oder es müssen fehlerbehaftete Messungen in Kauf genommen werden.

Die Fig.6-8 zeigen numerische Beispiele für den homodynen Fall. Die Simulationen wurden mittels Matlab berechnet, wobei folgende Werte zugrunde gelegt wurden

$f_s$ = 10 MHz Abtastfrequenz
$T$ = 1 ms Chirpdauer
m = 9980 Anzahl Abtastpunkte
$f_0$ = 600 MHz Mittenfrequenz
$B$ = 100 MHz Chirp-Bandbreite
$d_0$ = 0 Signal-Offset

Für zwei gleich starke Ziele in den Distanzen 4,5 m und 45 m zeigt Fig.6 die Darstellung des Frequenzverlaufs (oben) und des gemischten und abgetasteten Empfangssignals (unten) für einen perfekten linearen Chirp im homodynen Fall.

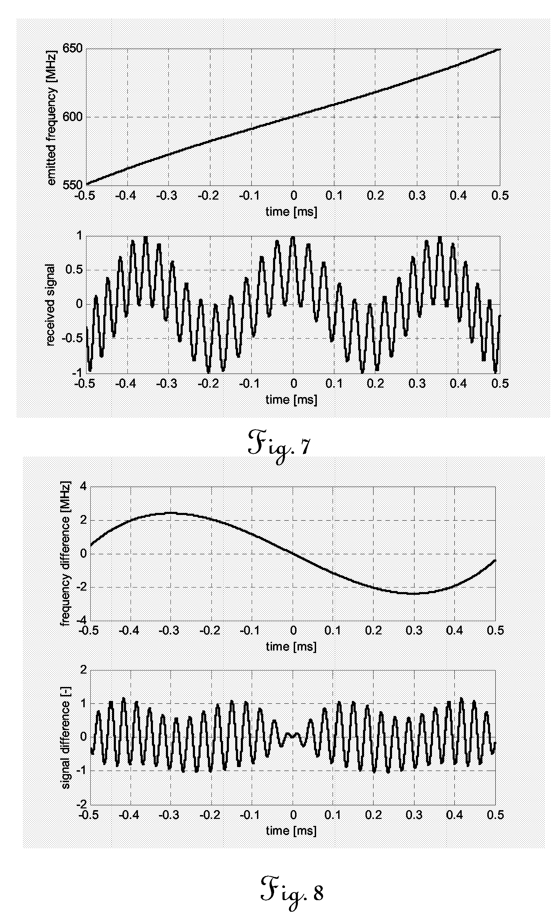

In Fig.7 wird eine Störung des idealen Chirps im homodynen Fall mit einem zusätzlichen Term vierter Ordnung in Gleichung (1) dargestellt. Damit sich Anfangs- und Endfrequenz wenig ändern wurde zudem eine leichte Anpassung des quadratischen Terms vorgenommen. Der Störterm in der Phasenfunktion ist somit

$$\Delta\Phi(t) = -6.0 \cdot 10^9 s^{-2} \cdot t^2 + 1.114 \cdot 10^{16} s^{-4} \cdot t^4 \qquad (9)$$

Dargestellt sind in Fig.7 wieder Frequenzverlauf (oben) und gemischtes und abgetastetes Empfangssignal (unten).

Die Darstellung von Differenzen von emittierter Frequenz und empfangenem Signal zwischen gestörtem und idealem Chirp im homodynen Fall erfolgt in Fig.8. Obschon die Chirp-Frequenz nur um maximal 0,42% vom Sollwert abweicht, ist der Unterschied im empfangenen Signal ebenso gross wie das Signal selbst. Dargestellt sind die Differenz der Frequenzen (oben) und die Differenz der Empfangssignale (unten).

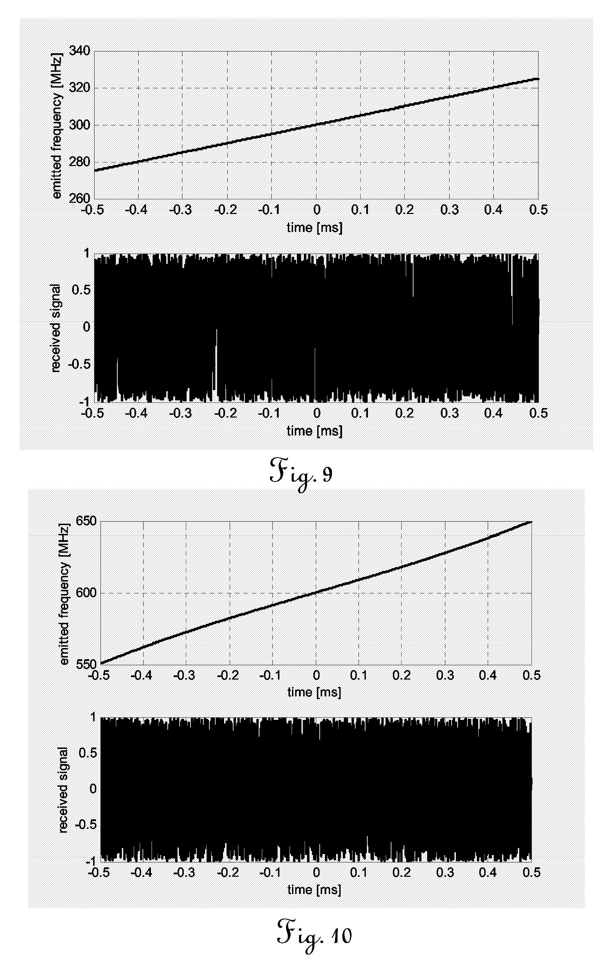

Die Fig.9-11 zeigen numerische Beispiele für den heterodynen Fall. Die Simulationen wurden ebenfalls mittels Matlab berechnet, wobei die gleichen Werte wie im homodynen Fall zugrunde gelegt werden. Die Frequenz $f_1$ des harmonischen Mischsignals beträgt $f_1$ = 500 MHz.

In Fig.9 erfolgt die Darstellung des Frequenzverlaufs (oben) und des Empfangssignals (unten) für den linearen Chirp im heterodynen Fall. Dabei werden dieselben Parameterwerte und dieselben Zieldistanzen wie im obigen homodynen Fall verwendet.

Fig.10 zeigt wie sich die Störung gemäss Gleichung (9) des idealen Chirps im heterodynen Fall auswirkt. Dargestellt sind wieder Frequenzverlauf (oben) und gemischtes und abgetastetes Empfangssignal (unten).

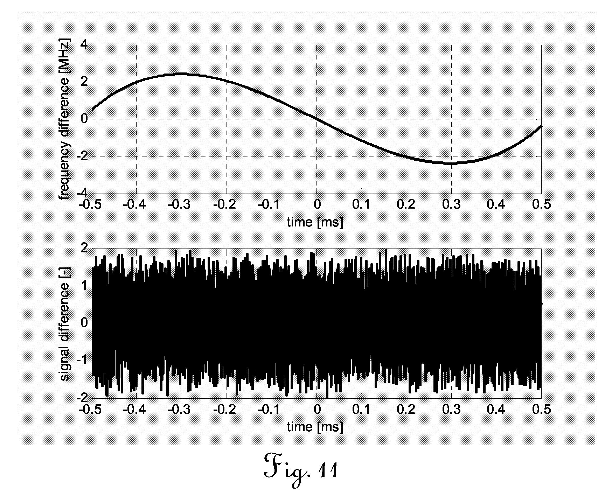

In Fig.11 werden die Differenzen von emittierter Frequenz und empfangenem Signal zwischen gestörtem und idealem Chirp im heterodynen Fall dargestellt. Obschon die Chirp-Frequenz nur um maximal 0,42% vom Sollwert abweicht, ist der Unterschied im empfangenen Signal wiederum ebenso gross wie das Signal selbst.

Es versteht sich für den Fachmann, dass die verschiedenen Anordnungen von Komponenten oder Prinzipien miteinander in alternativer oder ergänzender Weise kombiniert werden können. Auch können die Ausführungsbeispiele der Vorrichtungen - wie bereits erwähnt - in heterodyner oder homodyner Bauweise, mit Mischern verschiedener Bauart, wie beispielsweise Gilbert-Zellen oder abtastenden Mischern, oder mit Ersetzung eines oder mehrerer Mischer durch die Abfolge von Überlagerung und Nichtlinearität ausgestaltet werden.

**Patentansprüche**

1. Elektrooptisches Distanzmessverfahren mit den Schritten

   • Aussenden frequenzmodulierter optischer elektromagnetischer Strahlung auf $n \geq 1$ zu vermessende Ziele, wobei ein Chirp als eine der Strahlung aufgeprägte Frequenz durch $f(t) = \dfrac{d\Phi(t)}{dt}$ mit einer mit Parametern $c_j$ modellierten Phasenfunktion $\Phi(t) = \Phi(t; c_1 ... , c_m)$ beschrieben wird,

   • Empfangen der von den $n \geq 1$ Zielen zurückgestreuten Strahlung,
   • Umwandeln der empfangenen Strahlung in wenigstens ein Empfangssignal unter homodynem oder heterodynem Mischen,
   • Bestimmen wenigstens einer Distanz zu den $n \geq 1$ Zielen aus dem Empfangssignal,
   **dadurch gekennzeichnet, dass**

   - zumindest ein Teil der Parameter $c_j$ aus dem Empfangssignal bestimmt wird, wobei

   • eine totale Phasenänderung $\Phi_{tot} = \Phi(t_b) - \Phi(t_a)$ im Sendesignal während eines bekannten Zeitintervalls, insbesondere des Messintervalls, gemessen wird, insbesondere durch Zählen der Nulldurchgänge des Sendesignals, und
   • für die Koeffizienten $c_1, ... , c_m$ bei der Signalauswertung

   - eine allgemeine Nebenbedingung $\Phi(t_b; c_1 ... , c_m) - \Phi(t_a; c_1 ... , c_m) = \Phi_{tot}$ oder
   - eine lineare Nebenbedingung $\displaystyle\sum_{j=1}^{m} \left[ \Phi_j(t_b) - \Phi_j(t_a) \right] \cdot c_j = \Phi_{tot}$ berücksichtigt wird.

2. Distanzmessverfahren nach Anspruch 1,
   **dadurch gekennzeichnet, dass** zumindest der Teil der Parameter $c_j$, insbesondere zusammen mit den weiteren Systemparametern und einer wenigstens einer Distanz zugeordneten Laufzeit $t_k$, mittels Maximum-Likelihood-Verfahren bestimmt wird.

3. Distanzmessverfahren nach einem der vorangehenden Ansprüche,
   **dadurch gekennzeichnet, dass**
   das Aussenden frequenzmodulierter optischer elektromagnetischer Strahlung auf mehrere zu vermessende Ziele erfolgt und beim Bestimmen die Distanzen zu den zu vermessenden Zielen aus dem Empfangssignal abgeleitet werden.

4. Distanzmessverfahren nach einem der vorangehenden Ansprüche,
   **dadurch gekennzeichnet, dass**
   die Parameter $c_j$ bei jeder Messung bestimmt werden, insbesondere zusammen mit weiteren Systemparametern und/oder einer wenigstens einer Distanz zugeordneten Laufzeit $t_k$.

5. Distanzmessverfahren nach einem der vorangehenden Ansprüche,
   **dadurch gekennzeichnet, dass**

   die Phasenfunktion gemäss $\Phi(t) = \displaystyle\sum_{j=1}^{m} c_j \Phi_j(t)$ als endliche Linearkombination geeigneter Basisfunktionen $\Phi_j(t)$ modelliert wird, insbesondere mit

   - Potenzen,
   - orthogonalen Polynomen,
   - Wavelets oder
   - diskreten Deltafunktionen an den Abtastzeitpunkten als Basisfunktionen.

6. Distanzmessverfahren nach einem der Ansprüche 1 bis 5,
   **dadurch gekennzeichnet, dass**

die Phasenfunktion $\Phi(t)=\Phi(t;c_1,...,c_m)$ mit nichtlinearen Parametern $c_1,...,c_m$ modelliert wird, so dass das zu lösende Optimierungsproblem auch bezüglich der Parameter $c_1,...,c_m$ nichtlinear ist.

**7.** Distanzmessverfahren nach einem der vorangehenden Ansprüche,
**dadurch gekennzeichnet, dass,**
insbesondere bei kleiner Abweichung des Chirps von der Linearität, approximative Startwerte für die Laufzeiten $t_k$

mittels Frequenzanalyse und $f_k(t) = \begin{cases} 2e(t_0 - t_k), & \text{homodyn} \\ d + 2e(t - t_k) - f_0, & \text{heterodyn} \end{cases}$ mit approximativen Werten der Parameter berechnet werden, wobei $e(t)$ ein Echosignal und $d$ einen Signal-Offset bezeichnen.

**8.** Computerprogrammprodukt mit Programmcode, der auf einem maschinenlesbaren Träger gespeichert oder durch eine elektromagnetische Welle verkörpert ist, zur Durchführung des Verfahrens nach einem der Ansprüche 1 bis 7, wenn das Programm in einem Computer ausgeführt wird.

**9.** Elektrooptische Distanzmessvorrichtung zur Durchführung des Distanzmessverfahrens nach einem der Ansprüche 1 bis 7 mit wenigstens

• einer modulierbaren optischen Strahlungsquelle (TL) zur Erzeugung und zur Emission von optischer Strahlung auf $n \geq 1$ zu vermessende Ziele,
• einem Signalgenerator (SG) zur Modulation der Strahlungsquelle (TL), wobei ein Chirp als eine der Strahlung aufgeprägte Frequenz durch $f(t) = \dfrac{d\Phi(t)}{dt}$ mit einer Phasenfunktion $\Phi(t)$ beschrieben wird,

• einem Detektor (DE,DE1,DE2) zum Empfang und zur Umwandlung von rückgestreuter Strahlung in Empfangssignale,
• einem Signal-Prozessor, insbesondere einem digitalen Signal-Prozessor (DSP), zur Verarbeitung der Empfangssignale,
• einem Mischer (MI,MI1,MI2) zur Durchführung eines homodynen oder heterodynen Mischverfahrens,
**dadurch gekennzeichnet, dass**
Signalgenerator (SG), Detektor (DE,DE1,DE2) und Signal-Prozessor so angeordnet und ausgelegt sind, dass

- zumindest ein Teil der Parameter $c_j$ aus dem Empfangssignal
bestimmt wird, wobei

• eine totale Phasenänderung $\Phi_{tot}=\Phi(t_b)-\Phi(t_a)$ im Sendesignal während eines bekannten Zeitintervalls, insbesondere des Messintervalls, gemessen wird, insbesondere durch Zählen der Nulldurchgänge des Sendesignals, und
• für die Koeffizienten $c_1,...,c_m$ bei der Signalauswertung

- eine allgemeine Nebenbedingung $\Phi(t_b;c_1,...,c_m)-\Phi(t_a;c_1,...,c_m)=\Phi_{tot}$ oder
- eine lineare Nebenbedingung $\sum_{j=1}^{m}\left[\Phi_j(t_b) - \Phi_j(t_a)\right] \cdot c_j = \Phi_{tot}$ berücksichtigt wird.

**10.** Distanzmessvorrichtung nach Anspruch 9,
**dadurch gekennzeichnet, dass**
Signalgenerator (SG), Detektor (DE,DE1,DE2) und Signal-Prozessor so angeordnet und ausgelegt sind, dass die Parameter $c_j$ bei jeder Messung bestimmt werden, insbesondere zusammen mit weiteren Systemparametern und/oder einer wenigstens einer Distanz zugeordneten Laufzeit $t_k$.

**11.** Distanzmessvorrichtung nach einem der Ansprüche 9 oder 10,
**gekennzeichnet durch**
eine Vorrichtung zur Bestimmung der totalen Phase (TP) des Sendesignals, insbesondere einen Zähler (ZA).

**12.** Distanzmessvorrichtung nach einem der Ansprüche 9 bis 11,
**gekennzeichnet durch**
eine Abfolge von

• optischer oder elektrischer Überlagerung (UE) der rückgestreuten Strahlung mit einem Mischsignal und
• einer Nichtlinearität (NL), insbesondere einer quadratischen Nichtlinearität,

zur Erzeugung eines Mischterms, insbesondere mit einem nachfolgenden Tiefpaßfilter (TF).

13. Distanzmessvorrichtung nach einem der Ansprüche 9 bis 12,
**gekennzeichnet durch**
eine Steuerung (ST), welche den Signalgenerator (SG) so ansteuert, dass Abweichungen des Chirps von einem linearen Frequenzverlauf, insbesondere in Echtzeit, kompensiert werden.

**Claims**

1. Electro-optical distance-measuring method comprising the steps

   • transmission of frequency-modulated optical electromagnetic radiation to n≥1 targets to be surveyed, a chirp as a frequency superposed on the radiation being described by $f(t) = \dfrac{d\Phi(t)}{dt}$ with a phase function $\Phi(t) = \Phi(t;c_1,...,c_m)$ modelled with parameters $c_j$,
   • reception of the radiation scattered back by the $n≥1$ targets,
   • conversion of the received radiation into at least one received signal with homodyne or heterodyne mixing,
   • determination of at least one distance to the $n≥1$ targets from the received signal, **characterized in that** at least some of the parameters $c_j$ are determined from the received signal, wherein
   • a total phase change $\Phi_{tot} = \Phi(t_b) - \Phi(t_a)$ in the transmitted signal during a known time interval, in particular the measuring interval, is measured, in particular by counting the passages of the transmitted signal through zero, and
   • in the signal evaluation for the coefficients $c_1... , c_m$

      o a general secondary condition $\Phi(t_b;c_1,...,c_m)-\Phi(t_a;c_1,...,c_m)=\Phi_{tot}$ or
      o a linear secondary condition

$$\sum_{j=1}^{m}\left[\Phi_j(t_b) - \Phi_j(t_a)\right]\cdot c_j = \Phi_{tot}$$

   is taken into account.

2. Distance-measuring method according to Claim 1, **characterized in that** at least some of the parameters $c_j$ are determined by means of a maximum likelihood method, in particular together with the further system parameters and a transit time $t_k$ coordinated with at least one distance.

3. Distance-measuring method according to either of the preceding Claims, **characterized in that** frequency-modulated optical electromagnetic radiation is transmitted to a plurality of targets to be surveyed and, on determination, the distances to the targets to be surveyed are derived from the received signal.

4. Distance-measuring method according to any one of the preceding Claims, **characterized in that** the parameters $c_j$ are determined in each measurement, in particular together with further system parameters and/or a transit time $t_k$ coordinated with at least one distance.

5. Distance-measuring method according to any one of the preceding Claims, **characterized in that** the phase function according to $\Phi(t) = \sum_{j=1}^{m} c_j \Phi_j(t)$ is modelled as a finite linear combination of suitable base functions $\Phi_j(t)$, in particular with

   - powers

- orthogonal polynomials
- wavelets or
- discrete delta functions at the sampling points as base functions.

6. Distance-measuring method according to any one of Claims 1 to 5, **characterized in that** the phase function $\Phi(t)=\Phi(t;c_1,...,c_m)$ is modelled with nonlinear parameters $c_1,...,c_m$ so that the optimization problem to be solved is also nonlinear with respect to the parameters $c_1,..., c_m$.

7. Distance-measuring method according to any one of the preceding Claims, **characterized in that**, particularly in the case of a small deviation of the chirp from linearity, approximate starting values for the transit times $t_k$ are calculated by means of frequency analysis and

$$f_k(t) = \begin{cases} 2e(t_0 - t_k), & \text{homodyne} \\ d + 2e(t - t_k) - f_0, & \text{heterodyne} \end{cases}$$

with approximate values of the parameters, where $e(t)$ designates an echo signal and d designates a signal offset.

8. Computer program product with program code, which is stored on a machine-readable medium or is embodied by an electromagnetic wave, for carrying out the method according to any one of Claims 1 to 7, if the program is executed in a computer.

9. Electro-optical distance-measuring apparatus for carrying out the distance-measuring method according to any one of Claims 1 to 7, comprising at least

• a modulatable optical radiation source (TL) for production and for emission of optical radiation to $n \geq 1$ targets to be surveyed,
• a signal generator (SG) for modulation of the radiation source (TL), a chirp as a frequency superposed on the radiation being described by $f(t) = \dfrac{d\Phi(t)}{dt}$ with a phase function $\Phi(t)$,
• a detector (DE, DE1, DE2) for receiving and for converting back-scattered radiation into received signals,
• a signal processor, in particular a digital signal processor (DSP), for processing the received signals,
• a mixer (MI, MI1, MI2) for carrying out a homodyne or heterodyne mixing procedure, **characterized in that** signal generator (SG), detector (DE, DE1, DE2) and signal processor are arranged and designed so that at least some of the parameters $c_j$ are determined from the received signal, wherein
• a total phase change $\Phi_{tot} = \Phi(t_b) - \Phi(t_a)$ in the transmitted signal during a known time interval, in particular the measuring interval, is measured, in particular by counting the passages of the transmitted signal through zero, and
• in the signal evaluation for the coefficients $c_1...$ , $c_m$

  o a general secondary condition $\Phi(t_b;...,c_1,...,c_m)-\Phi(t_a;c_1,...,c_m)=\Phi_{tot}$ or
  o a linear secondary condition

$$\sum_{j=1}^{m} \left[\Phi_j(t_b) - \Phi_j(t_a)\right] \cdot c_j = \Phi_{tot}$$

  is taken into account.

10. Distance-measuring apparatus according to Claim 9, **characterized in that** signal generator (SG), detector (DE, DE1, DE2) and signal processor are arranged and designed so that the parameters $c_j$ are determined in each measurement, in particular together with further system parameters and/or a transit time $t_k$ coordinated with at least one distance.

11. Distance-measuring apparatus according to either of Claims 9 and 10, **characterized by** an apparatus for determining the total phase (TP) of the transmitted signal, in particular a counter (ZA).

12. Distance-measuring apparatus according to any one of Claims 9 to 11, **characterized by** a sequence of,

   • optical or electrical superposition (UE) of the back-scattered radiation with a mixing signal and
   • a nonlinearity (NL), in particular a quadratic nonlinearity,

for producing a mixed term, in particular with a down-circuit low-pass filter (TF).

13. Distance-measuring apparatus according to any one of Claims 9 to 12, **characterized by** a control (ST) which actuates the signal generator (SG) in such a way that deviations of the chirp from a linear frequency profile are compensated, in particular in real time.


**Revendications**

1. Procédé de mesure de distance électro-optique avec les étapes

   • émission de rayonnement électromagnétique optique modulé en fréquence à $n \geq 1$ cibles à mesurer, cependant qu'un chirp est décrit en tant que fréquence appliquée au rayonnement par $f(t) = \dfrac{d\Phi(t)}{dt}$ avec une fonction de phase $\Phi(t) = \Phi(t;c_1,...,c_m)$ modélisée avec des paramètres $c_j$,
   • réception du rayonnement rétrodiffusé par les $n \geq 1$ cibles,
   • conversion du rayonnement reçu en au moins un signal de réception par mélange homodyne ou hétérodyne,
   • détermination d'au moins une distance vers les $n \geq 1$ cibles à partir du signal de réception,
   **caractérisé en ce**

      - **qu'**au moins une partie des paramètres $c_j$ est déterminée à partir du signal de réception cependant

   • **qu'**une modification de phase totale $\Phi_{tot} = \Phi(t_b)-\Phi(t_a)$ est mesurée dans le signal d'émission pendant un intervalle de temps connu, en particulier de l'intervalle de mesure, en particulier en comptant les passages par zéro du signal d'émission, et
   • **qu'**il est tenu compte, pour les coefficients $c_1,,...,c_m$ pour l'exploitation du signal,

      - d'une contrainte générale $\Phi(t_b);c_1, ...,c_m)-\Phi(t_a;c_1,...,c_m)=\Phi_{tot}$ ou
      - d'une contrainte linéaire $\displaystyle\sum_{j=1}^{m}\left[\Phi_j(t_b) - \Phi_j(t_a)\right]\cdot c_j = \Phi_{tot}$ .

2. Procédé de mesure de distance selon la revendication 1, **caractérisé en ce qu'**au moins la partie des paramètres $c_j$ est déterminée au moyen du procédé du maximum de vraisemblance, en particulier avec les autres paramètres du système et une durée $t_k$ assignée à au moins une distance.

3. Procédé de mesure de distance selon l'une des revendications précédentes, **caractérisé en ce que** l'émission de rayonnement électromagnétique optique modulé en fréquence se fait sur plusieurs cibles à mesurer et lors de la détermination les distances par rapport aux cibles à mesurer sont dérivées du signal de réception.

4. Procédé de mesure de distance selon l'une des revendications précédentes, **caractérisé en ce que** les paramètres $c_j$ sont déterminés à chaque mesure, en particulier avec d'autres paramètres système et/ou au moins une durée $t_k$ assignée à au moins une distance.

5. Procédé de mesure de distance selon l'une des revendications précédentes, **caractérisé en ce que** la fonction de phase est modélisée selon $\Phi(t) = \displaystyle\sum_{i=1}^{m} c_j \Phi_j(t)$ comme combinaison linéaire finie de fonctions de base adéquates $\Phi_j(t)$, en particulier avec

   - des puissances,

- des polynômes orthogonaux,
- des ondelettes ou
- des fonctions delta discrètes aux instants de balayage

comme fonctions de base.

6. Procédé de mesure de distance selon l'une des revendications 1 à 5,
   **caractérisé en ce que** la fonction de phase $\Phi(t)=\Phi(t;c_1,..,c_m)$ est modélisée avec des paramètres non linéaires $c_1,...c_m$ si bien que le problème d'optimisation à résoudre n'est pas non plus linéaire par rapport aux paramètres

7. Procédé de mesure de distance selon l'une des revendications précédentes,
   **caractérisé en ce qu'**en particulier pour un petit écart du chirp de la linéarité des valeurs de départ approximatives sont calculées pour les durées $t_k$ au moyen d'analyse de fréquence et

$$f_k(t) = \begin{cases} 2e(t_0 - t_k), & \text{homodyne} \\ d + 2e(t - t_k) - f_0, & \text{heterodyne} \end{cases}$$ avec des valeurs approximatives des paramètres, cependant que $e(t)$ désigne un signal d'écho et d un décalage de signal.

8. Produit de programme d'ordinateur avec code de programme qui est mémorisé sur un support lisible par machine ou incorporé par une onde électromagnétique, pour l'exécution du procédé selon l'une des revendications 1 à 7, lorsque le programme est exécuté dans un ordinateur.

9. Dispositif de mesure de distance électro-optique pour exécuter le procédé de mesure de distance selon l'une des revendications 1 à 7 avec au moins

   • une source de rayonnement optique modulable (TL) pour générer et émettre un rayonnement optique sur $n \geq 1$ cibles à mesurer,
   • un générateur de signal (SG) pour la modulation de la source de rayonnement (TL), cependant qu'un chirp est décrit en tant que fréquence appliquée au rayonnement par $f(t) = \dfrac{d\Phi(t)}{dt}$ avec une fonction de phase $\Phi(t)$,

   • un détecteur (DE, DE1, DE2) pour la réception et pour la conversion de rayonnement rétrodiffusé en signaux de réception,
   • un processeur de signal, en particulier un processeur de signal numérique (DSP), pour le traitement des signaux de réception,
   • un mélangeur (MI, MI1, MI2) pour exécuter un procédé de mélange homodyne ou hétérodyne,
   **caractérisé en ce que** le générateur de signal (SG), le détecteur (DE, DE1, DE2) et le processeur de signal sont placés et conçus tels

   - qu'au moins une partie des paramètres $c_j$ est déterminée à partir du signal de réception, cependant

   • qu'une modification de phase totale $\Phi_{tot} = \Phi(t_b)-\Phi(t_a)$ est mesurée dans le signal d'émission pendant un intervalle de temps connu, en particulier de l'intervalle de mesure, en particulier en comptant les passages par zéro du signal d'émission et
   • qu'il est tenu compte, pour les coefficients $c_1,...,c_m$ pour l'exploitation du signal,

   - d'une contrainte générale $\Phi(t_b;c_1,...,c_m)-\Phi(t_a;c_1,...,c_m)=\Phi_{tot}$ ou

   - d'une contrainte linéaire $\sum\limits_{j=1}^{m}\big[\Phi_j(t_b) - \Phi_j(t_a)\big]\cdot c_j = \Phi_{tot}$ .

10. Dispositif de mesure de distance selon la revendication 9, **caractérisé en ce que** le générateur de signal (SG), le détecteur (DE, DE1, DE2) et le processeur de signal sont placés et conçus tels que les paramètres $c_j$ sont déterminés à chaque mesure, en particulier avec d'autres paramètres système et/ou une durée $t_k$ associée au moins à une distance.

11. Dispositif de mesure de distance selon l'une des revendications 9 ou 10, **caractérisé par** un dispositif pour déterminer la phase totale (TP) du signal d'émission, en particulier par un compteur (ZA).

**12.** Dispositif de mesure de distance selon l'une des revendications 9 à 11, **caractérisé par** une suite de

• superposition optique ou électrique (UE) du rayonnement rétrodiffusé avec un signal mélangé et
• d'une non linéarité (NL), en particulier une non linéarité carrée

pour produire un terme mélangé, en particulier avec un filtre passe-bas en aval (TF).

**13.** Dispositif de mesure de distance selon l'une des revendications 9 à 12, **caractérisé par** une commande (ST) qui commande le générateur de signal (SG) de telle manière que des écarts du chirp sont compensés par une allure de fréquence linéaire, en particulier en temps réel.

Fig. 1

Fig. 2

Fig. 3

Fig. 4

Fig. 5

Fig. 6

Fig. 7

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0834086 B1
- DE 19610970 A1
- DE 10065657 A1
- EP 1464982 A

**In der Beschreibung aufgeführte Nicht-Patentliteratur**

- **B. L. VAN DER WAERDEN.** Mathematische Statistik. Springer-Verlag, 1957
- **D. W. MARQUARDT.** An Algorithm for Least-Squares Estimation of Nonlinear Parameters. *SIAM Journal on Applied Mathematics,* 1963, vol. 11, 431-441
- **K. LEVENBERG.** A. Method for the Solution of Certain Non-Linear Problems in Least Squares. *Quarterly of Applied Mathematics,* 1944, vol. 2, 164-168
- **ÜBERSICHTSARTIKEL A. FORSGREN ; P. E. GILL ; M. H. WRIGHT.** *Interior Methods for Nonlinear Optimization, SIAM Review,* 2002, vol. 44, 525-597